# EUROPEAN PATENT SPECIFICATION

(11) **EP 4 199 216 B1**
(45) Date of publication and mention of the grant of the patent: **05.11.2025**
(21) Application number: 22756383.0
(22) Date of filing: 19.01.2022
(51) Int. Cl.: H01M 50/242, H01M 50/211

(54) **BATTERY MODULE AND BATTERY PACK INCLUDING SAME**
BATTERIEMODUL UND BATTERIEPACK DAMIT
MODULE DE BATTERIE ET BLOC-BATTERIE LE COMPRENANT

(30) Priority: 16.02.2021 KR 20210020448
(43) Date of publication of application: 21.06.2023
(73) Proprietor: LG Energy Solution, Ltd., Seoul 07335 (KR)
(72) Inventor: PARK, Subin, Daejeon 34122 (KR); SEONG, Junyeob, Daejeon 34122 (KR); PARK, Won Kyoung, Daejeon 34122 (KR)
(74) Representative: Goddar, Heinz J.
(86) International application number: PCT/KR2022/000981
(87) International publication number: WO 2022/177178

(56) References cited:
- EP-A1- 4 181 292
- EP-A1- 4 181 293
- EP-A1- 4 184 706
- WO-A1-2020/055219
- CN-U- 202 721 242
- CN-U- 209 729 985
- JP-A- 2003 059 465
- KR-A- 20140 016 326
- KR-A- 20170 135 597
- KR-A- 20200 086 172
- US-A1- 2020 161 606

## Description

### [Technical Field]

### CROSS-REFERENCE TO RELATED APPLICATION(S)

This application claims priority to and the benefit of Korean Patent Application No. 10-2021-0020448 filed in the Korean Intellectual Property Office on February 16, 2021

The present invention relates to a battery module and a battery pack including the same, and more particularly, to a battery module and a battery pack including the same, which are capable of effectively preventing a battery cell from swelling.

### [Background Art]

As development of technologies and demands for mobile devices are increased, there is a rapidly increasing demand for rechargeable batteries as energy sources. The rechargeable battery is attracting lots of interest as an energy source for a power device such as an electric bicycle, an electric vehicle, and a hybrid electric vehicle as well as a mobile device such as a mobile phone, a digital camera, a notebook computer, and a wearable device.

One or two or more battery cells are used for one small-scale mobile, whereas a high-output, high-capacity battery module is required for a middle-scale or large-scale device such as a vehicle. Therefore, a middle-scale or large-scale battery module made by electrically connecting a plurality of battery cells is used.

The middle-scale or large-scale battery module needs to be manufactured to be small in size and light in weight. Therefore, an angular battery or a pouch-type battery is mainly used as a battery cell for the middle-scale or large-scale battery module. The angular battery or the pouch-type battery may be stacked with a high degree of integration and have a small weight despite a large capacity. Meanwhile, the battery module may include a module frame having an internal space that accommodates a battery cell stack to protect the battery cell stack from external impact, heat, or vibration. The module frame is opened at front and rear sides thereof.

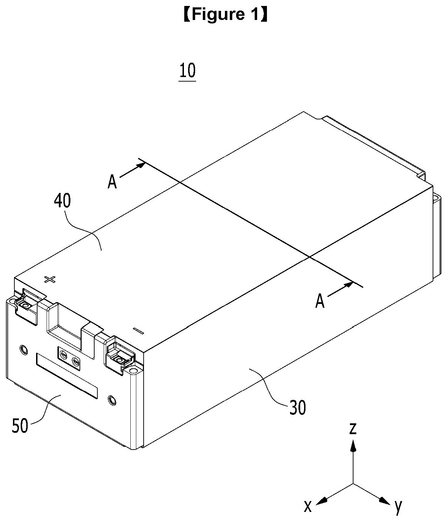

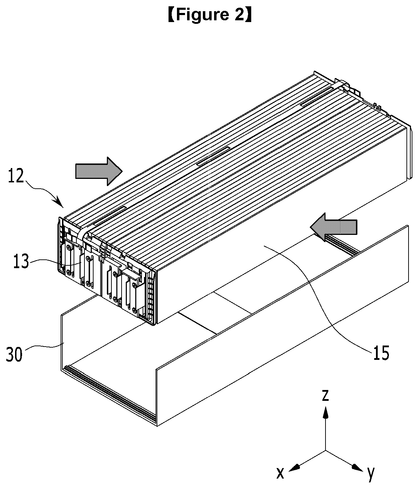

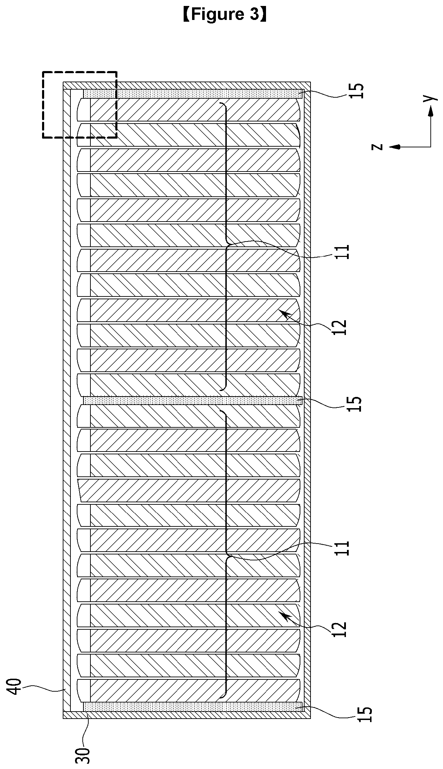

FIG. 1 is a perspective view of a battery module in the related art. FIG. 2 is a view illustrating a state in which a battery cell stack is mounted in a module frame of the battery module in FIG. 1. FIG. 3 is a view illustrating a cross-section taken along cutting line A-A in FIG. 1.

Referring to FIGS. 1 to 3, a battery module 10 in the related art includes a battery cell stack 12 made by stacking a plurality of battery cells 11 in one direction, module frames 30 and 40 configured to accommodate the battery cell stack 12, endplates 50 configured to cover front and rear sides of the battery cell stack 12, and busbar frames 13 provided between the endplates 50 and the front and rear sides of the battery cell stack 12.

Referring to FIG. 2, the battery module 10 is configured such that compressive pads 15 are attached to two opposite lateral sides of the battery cell stack 12, and then the battery cell stack 12 is mounted on the lower frame 30 in a state in which the two opposite lateral sides of the battery cell stack 12 are pressed. Therefore, a separate pressing process of pressing the battery cell stack 12 is required to manufacture the battery module 10 in the related art, which complicates a process and a production line.

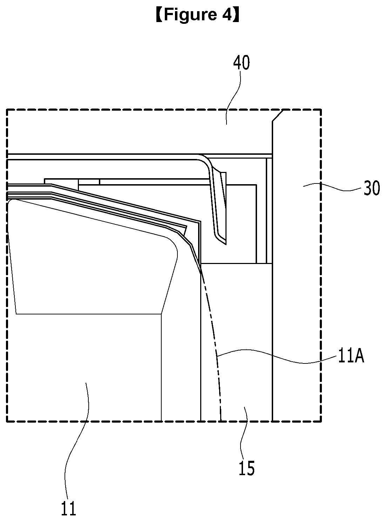

FIG. 4 is an enlarged view of a part of FIG. 3.

Referring to FIG. 4, the battery cell 11 swells by being deformed (11A) in a width direction during the process of charging or discharging the battery cell 11. However, in general, the compressive pad 15 has a limitation in absorbing the deformation of the battery module 10 in the width direction. There is a problem in that the compressive pad 15 may be permanently deformed if an excessively large amount of reaction force is applied to the compressive pad 15. In particular, the battery cell 11 is repeatedly expanded and contracted during the process of charging or discharging the battery cell 11. If the deformation of the battery module 10 in the width direction is not sufficiently absorbed during this process, the battery module also swells, and the module frame is also deformed.

Accordingly, there is a need for the development of a battery module, which is manufactured by a comparatively simple process, cooled with improved cooling performance, and configured to sufficiently absorb deformation of the battery cell caused by the expansion and contraction of the battery cell.

### [Disclosure]

### [Technical Problem]

The present invention has been made in an effort to provide a battery module and a battery pack including the same, which are capable of effectively preventing a battery cell from swelling.

### [Technical Solution]

The present invention provides a battery module as defined in claim 1.

In a preferred embodiment, an outer surface of the exterior member of the battery module may be exposed.

The exterior member may be equal in width to the battery cell or have a smaller width than the battery cell.

The exterior member may be positioned adjacent to a lower portion of the battery cell stack.

The exterior member may be configured as a thermal contraction tube, and the thermal contraction tube may be opened at upper and lower sides thereof.

The present invention also provides a battery pack including the above-mentioned battery module.

### [Advantageous Effects]

According to the embodiments of the present invention, it is possible to provide the battery module and the battery pack including the same, in which the exterior member surrounds the front and rear sides and the two opposite lateral sides of the battery cell stack, and the elastic member is provided between the exterior member and the lateral side of the battery cell stack, thereby effectively preventing the battery cell from swelling.

The effects of the present invention are not limited to the above-mentioned effects, and other effects, which are not mentioned above, may be clearly understood by those skilled in the art from the present specification and the accompanying drawings.

### [Description of the Drawings]

FIG. 1 is a perspective view of a battery module in the related art.
FIG. 2 is a view illustrating a state in which a battery cell stack is mounted in a module frame of the battery module in FIG. 1.
FIG. 3 is a view illustrating a cross-section taken along cutting line A-A in FIG. 1.
FIG. 4 is an enlarged view of a part of FIG. 3.
FIG. 5 is a perspective view of a battery module according to an embodiment of the present invention.
FIG. 6 is an exploded perspective view of the battery module in FIG. 5.
FIG. 7 is a view illustrating a top side in FIG. 5.
FIG. 8 is a view illustrating a part of a cross-section taken along cutting line B-B in FIG. 5.
FIG. 9 is an enlarged view of a part of FIG. 7.

### [Mode for Invention]

Hereinafter, several exemplary embodiments of the present invention will be described in detail with reference to the accompanying drawings so that those with ordinary skill in the art to which the present invention pertains may easily carry out the exemplary embodiments. The present invention may be implemented in various different ways and is not limited to the embodiments described herein.

Hereinafter, a battery module according to an embodiment of the present invention will be described. However, in this case, the battery module will be described, focusing on a front side of the battery module between the front and rear sides of the battery module. However, the present invention is not necessarily limited thereto. The same or similar contents may be applied to the rear side of the battery module.

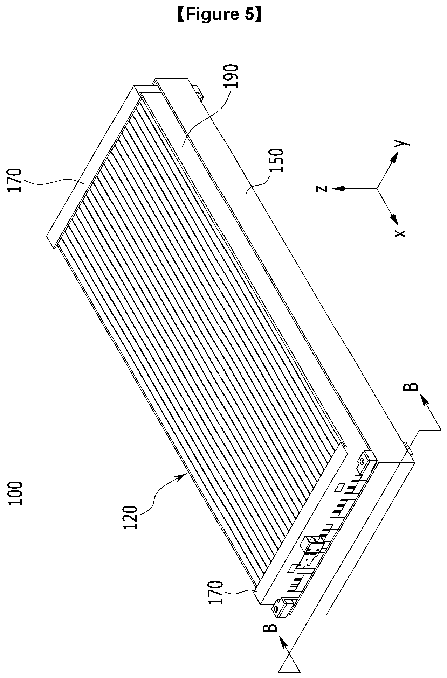

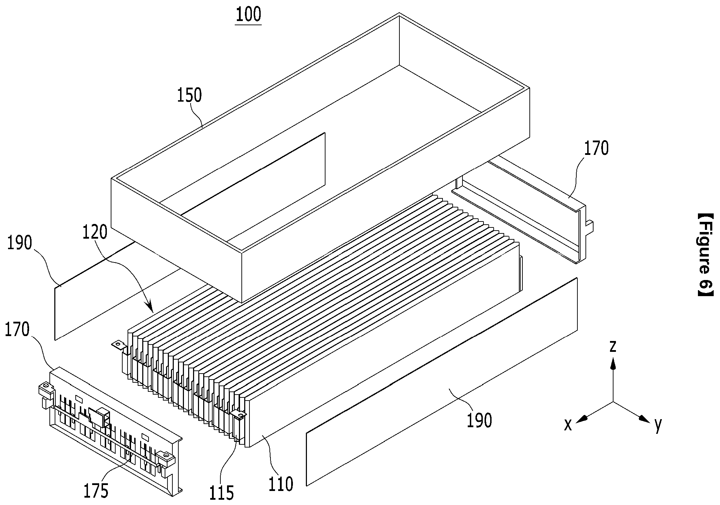

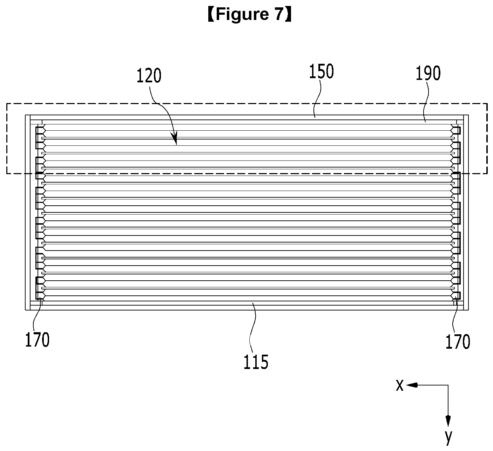

FIG. 5 is a perspective view of the battery module according to an embodiment of the present invention. FIG. 6 is an exploded perspective view of the battery module in FIG. 5. FIG. 7 is a view illustrating a top side in FIG. 5.

Referring to FIGS. 5 to 7, a battery module 100 according to the present embodiment includes: a battery cell stack 120 including a plurality of battery cells 110 stacked in a first direction (y-axis direction); an exterior member 150 configured to surround front and rear sides and two opposite lateral sides of the battery cell stack 120; and sensing blocks 170 positioned at the front and rear sides of the battery cell stack 120.

In addition, the battery cell stack 120 surrounded by the exterior member 150 is configured by stacking the plurality of battery cells 110. The battery cell 110 may be a pouch-type battery cell. The battery cell 110 may be manufactured by accommodating an electrode assembly in a pouch casing of a laminated sheet including a resin layer and a metal layer, and then thermally bonding a sealing part of the pouch casing. The battery cell 110 may be provided in plural, and the plurality of battery cells 110 are stacked to be electrically connected to one another, thereby constituting the battery cell stack 120.

In addition, the sensing blocks 170 are positioned between the exterior member 150 and the front and rear sides of the battery cell stack 120. The sensing blocks 170 respectively cover the front and rear sides of the battery cell stack 120 from which electrode leads 115 protrude. In addition, the sensing block 170 may be provided in the form of a basket.

One or more slits 175 may be formed in the sensing block 170. When the sensing block 170 is disposed, the electrode leads 115 of the battery cells 110 pass through the slits, thereby constituting an electrode lead assembly.

The exterior member 150 surrounds the sensing blocks 170 positioned at the front and rear sides of the battery cell stack 120. Therefore, the battery module 100 according to the present embodiment may ensure the performance in insulating the electrode lead assembly formed by passing through the slits of the sensing blocks 170.

For example, the sensing block 170 may be made of an electrically insulating material, e.g., a plastic material, a polymer material, or a composite material. However, the present invention is not limited thereto. Any material may be applied without limitation as long as the material has rigidity capable of forming the one or more slits and has electrical insulation.

Referring to FIGS. 5 to 7, the exterior member 150 surrounds an outer surface of the battery cell stack 120. In other words, the exterior member 150 is a member having two opposite lateral sides and front and rear sides and being opened at upper and lower sides thereof. That is, the two opposite lateral sides and the front and rear sides of the battery cell stack 120 are surrounded by the exterior member 150 and opened at upper and lower sides thereof. Yet in other words, the upper and lower sides of the battery cell stack 120 are exposed.

The exterior member 150 is made of an elastic material.

The elastic material is polyethylene (PE) or polytetrafluoroethylene (PTFE). The exterior member 150 is formed by wrapping the outer surface of the battery cell stack with a film or thermal contraction tube made of an elastic material. The thermal contraction tube shall be opened at upper and lower sides thereof. The material applied effectively absorbs external impact and has elasticity capable of sufficiently pressing the battery cells 110 included in the battery cell stack 120.

Therefore, in the present embodiment, the exterior member 150 prevents swelling of the battery cell and improves the dimensional stability of the battery module. In addition, because the exterior member 150 has elasticity, it is possible to minimize the deformation of the exterior member 150 caused by a change in volume of the battery cell 110.

In addition, the two opposite lateral sides and the front and rear sides of the exterior member 150 may correspond in size to the outer surface of the battery cell stack before the exterior member 150 surrounds the battery cell stack 120. For example, the two opposite lateral sides of the exterior member 150 may each be equal in size to the lateral side of the battery cell stack 120 or have a smaller size than the lateral side of the battery cell stack 120. In addition, the front and rear sides of the exterior member 150 may each be equal in size to each of the upper and lower sides of the battery cell stack 120 or have a smaller size than each of the upper and lower sides of the battery cell stack 120.

Therefore, in the present embodiment, the exterior member 150 can surround the battery cell stack 120 while pressing the battery cell stack 120 in a predetermined direction. That is, the exterior member 150 presses the battery cells 110 included in the battery cell stack 120 in the predetermined direction, which makes it possible to prevent swelling of the battery cell and improve the dimensional stability of the battery module. In addition, the battery cell stack 120 is pressed during the process in which the battery cell stack 120 is surrounded by the exterior member 150. Therefore, a separate process of pressing the battery cell stack 120 is not required, which makes it possible to simplify the process and production line.

In addition, the exterior member 150 may be equal in width to the battery cell 110 or have a smaller width than the battery cell 110. For example, the exterior member 150 may be positioned adjacent to a lower portion of the battery cell stack 120. Therefore, in the present embodiment, it is possible to minimize an area of the exterior member 150, prevent swelling of the battery cell, and improve the dimensional stability of the battery module.

In addition, an outer surface of the exterior member 150 may be exposed in the state in which the exterior member 150 surrounds the battery cell stack 120. Therefore, a lower surface of the battery cell stack 120 may be in direct contact with a heat transfer member (not illustrated) positioned on a lower portion of the battery module 100, which makes it possible to further improve the performance in cooling the battery module 100.

In addition, in a case in which the battery module 100 is mounted on a pack frame (not illustrated) of the battery pack, the exterior member 150 may be in contact with the pack frame (not illustrated). Therefore, in the present embodiment, the exterior member 150 may replace the module frames 30 and 40 of the battery module 10 in the related art, which makes it possible to improve price competitiveness by minimizing the number of components and improve efficiency in process and costs.

In addition, the outer surface of the battery cell stack 120 may be attached to an inner surface of the exterior member 150. In this case, the elastic material contained in the exterior member 150 may have a bonding force itself. In addition, the exterior member 150 and the battery cell stack 120 may be fixed to each other by means of a frictional force between the inner surface of the exterior member 150 and the outer surface of the battery cell stack 120. In addition, a separate bonding layer may be provided between the exterior member 150 and the battery cell stack 120.

For example, the bonding layer may be provided in the form of a tape or coated with a bondable binder. More particularly, the bonding layer may be coated with a bondable binder or provided in the form of a double-sided tape, such that the battery cell stack 120 and the exterior member 150 may be easily fixed. However, the present invention is not limited thereto. Any material may be applied without limitation as long as the material has bondability capable of fixing the battery cells 110 or fixing the battery cell 110 and the exterior member 150.

Therefore, the battery cell stack 120 may be stably accommodated in the exterior member 150.

Hereinafter, elastic members 190 included in the battery module 100 according to the present embodiment will be more specifically described.

Referring to FIGS. 5 to 7, the battery module 100 according to the present embodiment includes the elastic members 190 disposed between the exterior member 150 and the lateral sides of the battery cell stack 120. The elastic members 190 are respectively disposed between the exterior member 150 and the two opposite lateral sides of the battery cell stack 120.

The elastic member 190 is configured as a flat spring. Any material may be applied as long as the material has an elastic restoring force that may absorb a change in volume when the battery cell 110 expands.

In addition, the flat spring 190 may extend along the lateral side of the battery cell stack 120. In this case, the flat spring 190 extends along the outer surface of the battery cell stack 120. In addition, the flat spring 190 may be equal in size to the outer surface of the battery cell stack 120 or have a smaller size than the outer surface of the battery cell stack 120.

According to the invention, the exterior member 150 surrounds an outer surface of a structure in which the flat spring 190 is disposed on the lateral side of the battery cell stack 120. More in detail, the exterior member 150 is provided in the form of a film made of an elastic material, and the outer surface of the structure in which the flat spring 190 is disposed on the lateral side of the battery cell stack 120 is wrapped with the film. In a case in which the exterior member 150 is provided in the form of a thermal contraction tube, the thermal contraction tube is opened at upper and lower sides thereof, and the flat spring 190 is disposed between a lateral side of the thermal contraction tube and the lateral side of the battery cell stack 120.

For example, the flat spring 190 may be disposed on the lateral side of the battery cell stack 120 by means of a bonding force of the flat spring 190. In this case, the flat spring 190 and the battery cell stack 120 may be fixed to each other by a surface pressure applied by the exterior member 150.

Therefore, the flat spring 190 and the battery cell 110 may be stably fixed to each other even without a separate bonding layer.

As another example, the flat spring 190 may be attached to the lateral side of the battery cell stack 120. More specifically, a separate bonding layer (not illustrated) may be positioned between the flat spring 190 and the battery cell 110. For example, the bonding layer (not illustrated) may be configured as a bonding member such as a double-sided tape or a bonding agent. However, the bonding layer is not limited thereto, and any material may be applied as long as the material has bondability capable of fixing the battery cell 110 and the flat spring 190.

Therefore, in this embodiment, the battery cell 110 and the flat spring 190 may be bonded to each other, which makes it possible to further improve the rigidity and energy density of the battery cell stack 120 in the first direction (y-axis direction).

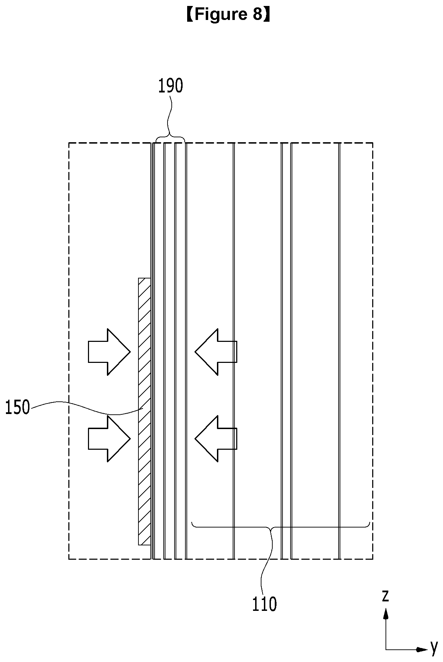

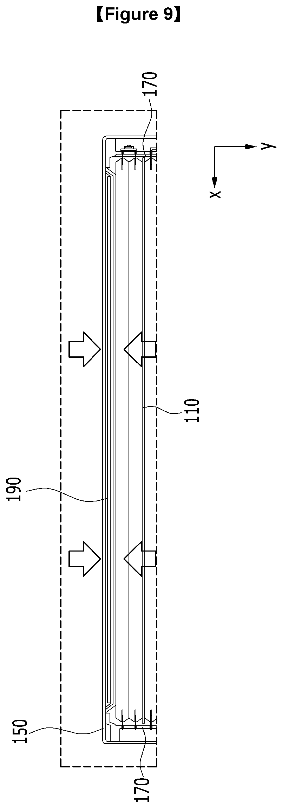

FIG. 8 is a view illustrating a part of a cross-section taken along cutting line B-B in FIG. 5. FIG. 9 is an enlarged view of a part of FIG. 7.

Referring to FIGS. 8 and 9, a reaction force, which is generated by the expansion of the battery cell 110 included in the battery cell stack 120 in the battery module 100, is applied directly to the flat spring 190 in the first direction (y-axis direction) of the battery cell stack 120. In this case, the elastic restoring force of the flat spring 190 absorbs the reaction force caused by the expansion of the battery cell 110.

Therefore, the flat spring 190 effectively absorbs the expansion of the battery cell 110 included in the battery cell stack 120 and thus sufficiently supports the reaction force caused by the expansion of the battery cell 110 at an outermost periphery of the battery cell stack 120.

In addition, based on the first direction (y-axis direction) of the battery cell stack 120, the exterior member 150 presses the outer surface of the battery cell stack 120 and the outer surface of the flat spring 190 in a direction opposite to the direction in which the reaction force caused by the expansion of the battery cell 110 is applied.

Therefore, in this embodiment, the exterior member 150 may support the expansion of the battery cell 110 by using the elastic restoring force of the flat spring 190 while pressing the outer surface of the battery cell stack 120, which makes it possible to more effectively prevent swelling of the battery cell 110 in the battery module 100.

A battery pack according to another aspect of the present invention includes the above-mentioned battery module. Meanwhile, one or more battery modules according to the exemplary embodiment may be packaged in a pack casing, thereby forming a battery pack.

The above-mentioned battery module and the battery pack including the battery module may be applied to various devices. Examples of such devices may include transportation means such as an electric bicycle, an electric vehicle, and a hybrid vehicle, but the present invention is not limited thereto, and may be applied to various devices that may use the battery module and the battery pack including the battery module. These configurations may also belong to the scope of the present invention.

Although preferred examples of the present invention have been described in detail hereinabove, the present invention is not limited thereto, but may include many variations and modifications, as long as they fall within the scope of the appended claims.

### Description of Reference Numerals

- 100:: Battery module
- 110:: Battery cell
- 120:: Battery cell stack
- 150:: Exterior member
- 170:: Sensing block
- 190:: Elastic member

## Claims

1. A battery module (100) comprising:
a battery cell stack (120) including a plurality of battery cells (110) stacked in a first direction; to surround two opposite
sensing blocks (170) covering the front and rear sides of the battery cell stack (120) from which electrode leads (115) protrude; and
a flat spring (190), which is adapted to provide a restoring force to absorb a reaction force caused by the expansion of the battery cell (110) applied in the first direction, disposed on the two lateral sides of the battery cell stack (120) that are opposite in the first direction;
wherein an exterior member (150) a film made of a film of elastic material, either polyethylene (PE) or polytetrafluoroethylene (PTFE), wraps an outer surface of the above structure so as to surround the flat springs (190) disposed on the lateral sides of the battery cell stack (120) and the sensing blocks (170) covering the front and rear sides of the battery cell stack (120).

2. The battery module (100) of claim 1, wherein:
the flat spring (190) is attached to the lateral sides of the battery cell stack (120).

3. The battery module (100) of claim 1, wherein:
the flat spring (190) extends along the lateral sides of the battery cell stack (120).

4. The battery module (100) of claim 1, wherein:
an outer surface of the exterior member (150) of the battery module (100) is exposed.

5. The battery module (100) of claim 4, wherein:
the exterior member (150) is equal in width to the battery cell (110) or has a smaller width than the battery cell (110).

6. The battery module (100) of claim 5, wherein:
the exterior member (150) has a smaller width than the battery cell (110) and is positioned adjacent to a lower portion of the battery cell stack (120).

7. The battery module (100) of claim 1, wherein:
the exterior member (150) is configured as a thermal contraction tube, and
the thermal contraction tube is opened at upper and lower sides thereof.

8. A battery pack comprising:
A battery pack comprising the battery module (100) according to claim 1.

## Patentansprüche

1. Batteriemodul (100), umfassend:
einen Batteriezellenstapel (120), der eine Mehrzahl von Batteriezellen (110) umfasst, die in einer ersten Richtung gestapelt sind;
zwei gegenüberliegende Sensoreinheiten (170),
die die Vorder- und Rückseite des Batteriezellenstapels (120) abdecken, von denen Elektrodenableitungen (115) herausragen; und
eine Flachfeder (190), die dazu ausgelegt ist, eine Rückstellkraft bereitzustellen, um eine durch die Ausdehnung der Batteriezelle (110) in der ersten Richtung verursachte Reaktionskraft aufzunehmen, wobei die Flachfeder (190) an den zwei seitlichen Seiten des Batteriezellenstapels (120), die in der ersten Richtung gegenüberliegen, angeordnet ist; wobei ein Außenelement (150) aus einem elastischen Folienmaterial, entweder Polyethylen (PE) oder Polytetrafluorethylen (PTFE), eine Außenfläche der oben genannten Struktur umschließt, sodass die an den seitlichen Seiten des Batteriezellenstapels (120) angeordneten Flachfedern (190) und die die Vorder- und Rückseite des Batteriezellenstapels (120) abdeckenden Sensoreinheiten (170) umgeben werden.

2. Batteriemodul (100) nach Anspruch 1, wobei:
die Flachfeder (190) an den seitlichen Seiten des Batteriezellenstapels (120) befestigt ist.

3. Batteriemodul (100) nach Anspruch 1, wobei:
die Flachfeder (190) sich entlang der seitlichen Seiten des Batteriezellenstapels (120) erstreckt.

4. Batteriemodul (100) nach Anspruch 1, wobei:
eine Außenfläche des Außenelements (150) des Batteriemoduls (100) freiliegt.

5. Batteriemodul (100) nach Anspruch 4, wobei:
das Außenelement (150) eine gleiche Breite wie die Batteriezelle (110) aufweist oder eine geringere Breite als die Batteriezelle (110) aufweist.

6. Batteriemodul (100) nach Anspruch 5, wobei:
das Außenelement (150) eine geringere Breite als die Batteriezelle (110) aufweist und neben einem unteren Abschnitt des Batteriezellenstapels (120) angeordnet ist.

7. Batteriemodul (100) nach Anspruch 1, wobei:
das Außenelement (150) als thermischer Schrumpfschlauch ausgebildet ist, und der Schrumpfschlauch an seinen oberen und unteren Seiten geöffnet ist.

8. Batteriepack, umfassend:
ein Batteriepack, welches das Batteriemodul (100) nach Anspruch 1 umfasst.

## Revendications

1. Module de batterie (100) comprenant :
un empilement de cellules de batterie (120) comprenant une pluralité de cellules de batterie (110) empilées dans une première direction ; pour entourer deux blocs de détection en vis à vis (170) couvrant les faces antérieure et postérieure de l'empilement de cellules de batterie (120) d'où dépassent des conducteurs d'électrode (115) ; et
un ressort plat (190) adapté pour exercer une force de rappel afin d'absorber une force de réaction provoquée par l'expansion de la cellule de batterie (110) appliquée dans la première direction, disposé sur les deux côtés latéraux de l'empilement de cellules de batterie (120) faisant face à la première direction ; un élément extérieur (150), composé d'un matériau élastique de film, soit du polyéthylène (PE), soit du polytétrafluoroéthylène (PTEE), enveloppant une surface extérieure de la structure ci-dessus de façon à entourer les ressorts plats (190) disposés sur les côtés latéraux de l'empilement de cellules de batterie (120) et les blocs de détection (170) couvrant les faces antérieure et postérieure de l'empilement de cellules de batterie (120).

2. Module de batterie (100) selon la revendication 1,
le ressort plat (190) étant fixé sur les côtés latéraux de l'empilement de cellules de batterie (120).

3. Module de batterie (100) selon la revendication 1,
le ressort plat (190) s'étendant le long des côtés latéraux de l'empilement de cellules de batterie (120).

4. Module de batterie (100) selon la revendication 1,
une surface extérieure de l'élément extérieur (150) du module de batterie (100) étant exposée.

5. Module de batterie (100) selon la revendication 4,
la largeur de l'élément extérieur (150) étant égale à celle de la cellule de batterie (110) ou étant inférieure à celle de la cellule de batterie (110).

6. Module de batterie (100) selon la revendication 5,
la largeur de l'élément extérieur (150) étant inférieure à celle de la cellule de batterie (110) et l'élément extérieur étant positionné adjacent à une partie inférieure de l'empilement de cellules de batterie (120).

7. Module de batterie (100) selon la revendication 1,
l'élément extérieur (150) étant configuré comme un tube de contraction thermique, et le tube de contraction thermique étant ouvert sur ses côtés supérieur et inférieur.

8. Bloc-batterie comprenant :
un bloc-batterie comprenant le module de batterie (100) selon la revendication 1.
